# EUROPÄISCHE PATENTSCHRIFT

(11) **EP 0 798 325 B1**
(45) Veröffentlichungstag und Bekanntmachung des Hinweises auf die Patenterteilung: **03.05.2000**
(21) Anmeldenummer: 97105193.3
(22) Anmeldetag: 27.03.1997
(51) Int. Cl.: C08G 63/91, C08G 18/42, C08J 11/24, C08J 11/26

(54) **Polyhydroxyverbindungen zur Polyurethan-Synthese geeignet**
Polyhydroxy compounds suitable for polyurethane syntheses
Composés polyhydroxylés pour la synthèse de polyuréthanes

(30) Priorität: 27.03.1996 CH 79896
(43) Veröffentlichungstag der Anmeldung: 01.10.1997
(73) Patentinhaber: Sika AG, vorm. Kaspar Winkler & Co., CH-8048 Zürich (CH)
(72) Erfinder: Gerber, Ulrich, 8048 Zürich (CH); Meyer, Werner, 8702 Zollikon (CH); Schelbert, Paul, 8913 Ottenbach (CH)
(74) Vertreter: Blum, Rudolf Emil Ernst

(56) Entgegenhaltungen:
- EP-A- 0 180 973
- EP-A- 0 504 454
- WO-A-95/24442
- FR-A- 2 141 041

## Beschreibung

### Technisches Gebiet

Die vorliegende Erfindung betrifft neuartige Polyhydroxylverbindungen, deren Herstellung und Verwendung zur Formulierung von reaktiven Polyurethan-Massen, insbesondere Beschichtungen und Bodenbelägen.

### Stand der Technik

Polyurethane, gebildet durch Polyaddition von Polyisocyanaten und Polyhydroxylverbindungen, finden als reaktive ein- oder zweikomponentige Systeme einen breiten Einsatz als Klebstoffe, Abdichtungsmaterialien, Dekorations- und Schutzbeschichtungen und Bodenbeläge. Dabei haben sie verschiedensten Anforderungen zu genügen. Im besonderen sind vor der Applikation die Lagerstabilitäten, während der Applikation die Topfzeiten und Verarbeitungsviskositäten und nach der Applikation die Reaktivität, die mechanischen und thermischen Eigenschaften sowie die chemischen Beständigkeiten von Bedeutung. Bei Beschichtungen und Bodenbelägen spielen oft die ästhetischen Eigenschaften eine ausschlaggebende Rolle. So müssen die Oberflächen, je nach Anwendung, unterschiedliche Glanzgrade aufweisen, von hoch- über seidenglänzend bis matt. Die Oberflächen müssen vollständig defektfrei sein, so sind Oberflächenfehler wie Nadelstiche, Pigmentausschwimmungen, Bernard'sche Zellen, Läufer, Rub-Out-Effekte, Spritznebelaufnahmen, Kocher, Verlaufsstörungen, Krater, Blasen und andere nicht tolerierbar. Es ist allgemein bekannt, dass das Erreichen aller technischen Forderungen einerseits eine ausgewogene Abstimmung aller Komponenten einer Formulierung erfordert, andererseits auch massgeblich von den verwendeten Polyhydroxylverbindungen abhängt.

Um die oben erwähnten Anforderungen zu erreichen, müssen die verwendeten Bestandteile der Formulierungen miteinander chemisch verträglich sein. Neben den ausschliesslich technischen Anforderungen an diese Produkte spielen wirtschaftliche Aspekte eine grosse Rolle. Das Preis-Leistungsverhältnis eines Produktes entscheidet oft über den möglichen Einsatz. Bei Polyurethan-Massen werden die Kosten der Gesamtformulierung stark von den Kosten der eingesetzten Polyhydroxylverbindungen bestimmt. Hinzu kommt, dass in zunehmendem Masse Betrachtungen über die gesamte Oekobilanz und Umweltverträglichkeit von kommerziellen Produkten angestellt werden. In verschiedenen Ländern sind seitens der Gesetzgeber Bemühungen im Gange, zur Schonung der Umwelt und der Rohstoffressourcen, die Oekobilanz von kommerziellen Produkten zu verbessern. Daher verlangen jetzt schon einige Behörden die Erstellung von Umweltverträglichkeitsberichten, um den Eingriff in die gesamte Oekobilanz eines Produktes beurteilen zu können. In diesem Zusammenhang ist die Minimierung des Kohlenstoffdioxid-Ausstosses zur Bekämpfung des weltweiten Treibhauseffektes von zentraler Bedeutung. Dies kann beispielsweise durch vermehrtes Recycling von brennbaren Rohstoffen erzielt werden.

In zweikomponentigen Polyurethan-Formulierungen (Komponente A: Polyol, Komponente B: Isocyanat) für Beschichtungen (Bodenbeläge, Schutzanstriche, Korrosionsschutzbeschichtungen) kommt ein breites Spektrum unterschiedlicher Polyhydroxylverbindungen wie zum Beispiel Polypropylenglykol, Polyethylenglykol, Polyester, Polykarbonate etc. zur Anwendung.

Es ist bekannt, dass die Verwendung von Kastoröl (Rizinusöl) als Polyol-Komponente Materialien mit guten Eigenschaften (besonders schöne defektfreie Oberflächen, lange Topfzeiten bei anschliessend zügiger Durchhärtung) ergibt. Meistens wird dabei Kastoröl zusammen mit anderen auf Polyethylenoxid- oder Polypropylenoxid-basierenden Polyolen verwendet.

Das DDR-Patent Nr. 125037 beschreibt die Herstellung von Polyurethanmassen, beispielsweise einer Mischung aus rezykliertem, d.h. alkoholisiertem, PET und Kastoröl. Die Verwendung von Kastoröl jedoch zusammen mit aromatischen Polyester-Polyolen als *physikalisches Gemen*ge in der Formulierung, wie zum Beispiel im obigen Patent beschrieben, ist für die Herstellung von Polyurethan-Beschichtungen und Bodenbelägen nicht geeignet, da Kastoröl mit dem Polyester chemisch unverträglich ist und sich entmischt. Man erhält deshalb schlechte mechanische Eigenschaften (tiefe Abrasions- und Kratzfestigkeiten), vor allem aber schlechte Oberflächeneigenschaften (Ausschwimmen von Pigmenten, Oberflächenstörungen) und mangelhafte Lagerstabilität (Absetzen der Füllstoffe). Dies ist unter anderem auf die chemische Unverträglichkeit der Polyolkomponenten zurückzuführen. Auch ist die Verarbeitbarkeit aufgrund der hohen Viskosität der im obigen Patent beschriebenen Bindemittel für die Verwendung in Beschichtungen und Bodenbelägen ungenügend.

Verfahren zur Rezyklierung von PET-Materialien zur Herstellung von Kunststoffen sind seit längerem bekannt. Das US-Patent Nr. 5,252,615 von Sherwin-Williams Co. beschreibt die Umsetzung von Alkoholyseprodukten des PET mit z.B. Säuren unter Bildung unterschiedlich stark säuregruppenhaltiger Produkte, die insbesonders für die Herstellung von wässrigen, radikalisch gehärteten Acryl-Beschichtungen geeignet sind. Die Publikation von Eastman Chemicals Nr. N-292 B beschreibt die Herstellung von ungesättigten Polyesterharzen aus PET. Die Verwendung von Umsetzungsprodukten aus Polyethylenterephthalat, PET, und Polyolen (depolymerisiertes PET) als Rohstoff für die Herstellung von PU-Massen (vor allem Schaumstoffe) ist ebenfalls bekannt. So beschreiben z.B. die US-Patente Nr. 4,223,068, Nr. 4,417,001 und Nr. 4,048,104 die Herstellung von harten Polyurethan-Schaumstoffen aus rezykliertem PET. Die Verwendung dieser Bindemittel eignet sich jedoch nicht für die Herstellung von Beschichtungen und Bodenbelägen. So führt die Verwendung von solchen aromatischen Polyolen meist zu spröden Produkten, schlechter Aesthetik und ungenügender Verarbeitbarkeit.

Ziel der vorliegenden Erfindung war es daher, neuartige Polyhydroxyl-Verbindungen mit günstiger Umweltverträglichkeit herzustellen, mit denen die zum Teil gegensätzlichen technischen Anforderungen, die an Polyurethan-Massen, insbesondere Bodenbeläge und Beschichtungen gestellt werden, wie ausgezeichnete Mechanik, gute chemische Beständigkeiten, gute Verarbeitungszeiten und gute Lagerstabilitäten, optimaler zu realisiseren sind als mit den bisher bekannten Verbindungen, und gleichzeitig die Gesamt-Oekobilanz der Produkte zu verbessern. Im besonderen waren die Ziele der vorliegenden Erfindung, Polyhydroxylverbindungen herzustellen, welche mindestens zum Teil aus kostengünstigen, rezyklierten, gegebenenfalls in Kombination mit natürlich nachwachsenden Rohstoffen synthetisierbar sind und die Formulierung von Bodenbelägen und Beschichtungen mit
- ausgezeichneten mechanischen Eigenschaften, wie hohe Zugfestigkeiten und hohe Zugmodule bei hohen Dehnungen, gute Abrasionsbeständigkeiten, hohe Druckfestigkeiten, hohe Kratzbeständigkeiten
- defektfreien, ästhetischen Oberflächen
- guten Chemikalienbeständigkeiten
ermöglichen.

### Zusammenfassung der Erfindung

Ein Gegenstand der vorliegenden Erfindung ist die Bereitstellung von Hydroxylgruppen enthaltenden reaktiven Bindemitteln, welche direkt aus der Umsetzung von aromatische Gruppen enthaltenden Polyestern wie PET mit aromatischen oder aliphatischen Polyolen und/oder Aminoalkoholen und Fettsäureestern, wie Kastoröl, gewonnen werden.

Ein weiterer Gegenstand der vorliegenden Erfindung ist die Bereitstellung eines Herstellungsverfahrens für das erfindungsgemässe Bindemittel, das ohne die Verwendung eines zusätzlichen Lösungsmittels durchgeführt werden kann.

Ein weiterer Gegenstand der vorliegenden Erfindung war die Bereitstellung einer Polyurethan-Zusammensetzung enthaltend das erfindungsgemässe Bindemittel und ein Di- oder Polyisocyanat, insbesonders eine Polyurethan-Zusammensetzung, die sich für die Herstellung von Bodenbelägen und Beschichtungen eignet.

Das erfindungsgemässe Bindemittel enthält das Umsetzungsprodukt von aromatischen Polyestern, wie Polyethylennaphthalat (PEN) oder Polyethylenterephthalat (PET) oder deren Copolykondensate, mit aromatischen oder aliphatischen Di- und/oder Polyolen und/oder Aminoalkoholen sowie Fettsäureestern, üblicherweise in Gegenwart unreagierten Fettsäureesters.

### Ausführliche Beschreibung der Erfindung

Das erfindungsgemässe Bindemittel wird auf der Basis rezyklierten aromatischen Polyesters resp. Gemischen aromatischer Polyester hergestellt. Solche Polyester sind beispielsweise Polyethylennaphthalat (PEN) oder Polyethylenterephthalat (PET). Polyethylenterephthalat ist gegenwärtig wegen der grossen Menge, in der es rezykliert wird, das interessantere Ausgangsmaterial.

Das Bindemittel enthält das Umsetzungsprodukt aromatischer Polyester oder deren Copolykondensate mit aromatischen oder aliphatischen Di- und/oder Polyolen und/oder Aminoalkoholen sowie Fettsäuren. Das Bindemittel enthält üblicherweise unreagierte Fettsäureester.

Das Reaktionsprodukt aus Polyester, Di- oder Polyol oder Aminoalkohol sowie Fettsäureestern weist eine der folgenden Formeln auf: 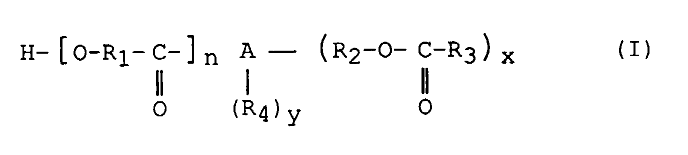 und/oder 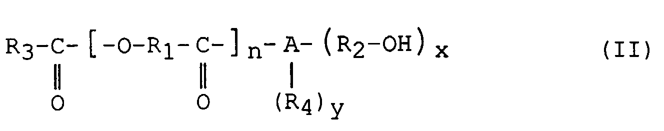 in denen 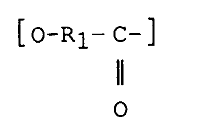 eine Polyesterrepetitionseinheit enthaltend mindestens eine aromatische Gruppe ist,
- n: eine ganze Zahl von 1 bis 4 ist,
- A: Sauerstoff oder Stickstoff bedeutet,
- x: 1 oder 2 bedeutet und y = 0 oder 1 ist, wobei x+y für A = N = 2 ist und wobei für A = O x = 1 und y = 0 ist,
- R₁: ein aromatisches Polyestersegment ist, insbesonders ein Polyestersegment des Kondensationsprodukts aus einer aromatischen Disäure und einem gegebenenfalls substituierten aliphatischen Glykol,
- R₂: eine gegebenenfalls OH substituierte, aliphatische, cyclische oder aromatische C₁-C₈ Kohlenwasserstoffkette oder eine gegebenenfalls OH-substituierte Di-, Tri- oder Tetraalkylethergruppe oder ein gegebenenfalls OH substituierter Ester oder Polyester aus mindestens einer aliphatischen oder aromatischen Carbonsäure mit aliphatischen Alkoholen und/oder Glykolen,
- R₃: ein mit mindestens einer OH-Gruppe substituierter, gesättigter oder ungesättigter C₁₁-C₂₁-Alkylrest ist und
- R₄: Wasserstoff oder Hydroxyalkyl bedeutet.

Das erfindungsgemässe Bindemittel enthält neben den Verbindungen der Formeln (I) und/oder (II) mindeestens eine Verbindung, die ausgewählt ist aus der Gruppe umfassend
HO-R₂-OH, HO-R₂-NH₂, 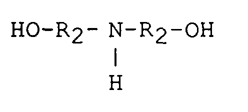 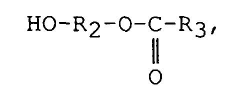 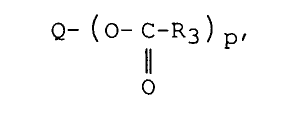 worin R₂ und R₃ die oben angegebene Bedeutung haben, Q ein gegebenenfalls OH substituierter C₃-C₆-Alkylrest ist und p = 1 bis 4 bedeutet.

Ein bevorzugtes Bindemittel ist eines, in dem
R₁ = 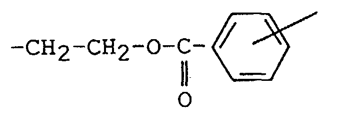 oder 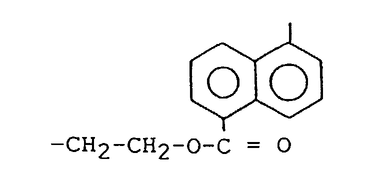 oder 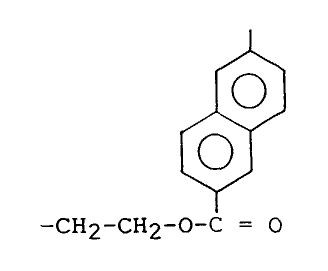 ist,
R₂ = -CH₂-CH₂-O-CH₂-CH₂-O-CH₂-CH₂- ist oder einschliesst
R₃ = CH₃(CH₂)₅-CHOH-CH₂-(CH)₂-(CH₂)₇-
Q = 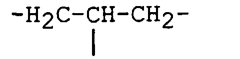
und p = 3 ist.

Speziell bevorzugt wird R₂ ausgewählt aus der Gruppe umfassend

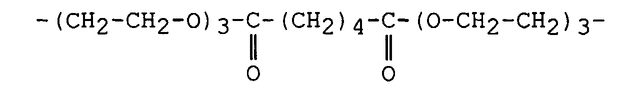

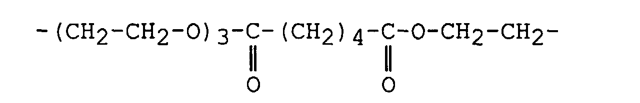

Ganz speziell bevorzugt hinsichtlich optimierter Verträglichkeit bei gleichzeitig guter Reaktivität ist R₂ = ethoxyliertes Neopentylglykol, insbesonders ein solches mit 1.5 bis 3 Ethylenoxid-Repetitionseinheiten.

Das erfindungsgemässe Bindemittel kann bezüglich seiner Eigenschaften nicht nur durch die Menge unreagierten Fettsäureesters, sondern gegebenenfalls auch durch Modifikation des im Bindemittel enthaltenen Prepolymers durch Reaktion mit Di-Säuren variiert werden.

Als aromatische Gruppen enthaltender Polyester ist PET - wie bereits oben erwähnt - ein bevorzugtes Ausgangsmaterial, da es in grossen Mengen als Recycling-Produkt anfällt, z.B. in Form von gebrauchten Flaschen. Solches rezykliertes PET kann in Form ganzer, entleerter Flaschen oder, vorzugsweise, in Form von zerkleinerten, speziell bevorzugt gewaschenen Stückchen verwendet werden.

Als Polyole sind im besonderen Ethylenglykol, Diethylenglykol, Triethylenglykol, Tetraethylenglykol, Tripropylenglykol, 1,4-Butandiol, 1,6-Hexandiol und Glycerin bevorzugt. Weitere verwendbare Polyole mit günstigen Eigenschaften sind: Dipropylenglykol, 2,2,4-Trimethyl-1,3-pentandiol, Neopentylglykol, 1,2-Propanglykol, 1,3-Propanglykol, 1,4-Butanglykol, 1,3-Butanglykol, 2,3-Butanglykol, 1,5-Pentandiol, 2-Methyl-l,5-pentandiol, 2-Methyl-2'-ethyl-1,3-propandiol, Bisphenol-A-ethoxylat, Dodecahydro-bisphenol-A, 2,2'-Thio-diethanol, Dimethylolpropionsäure, Hydroxy-terminierte Polybutadiene, 1,4-Cyclohexandimethanol, 1,2-Cyclohexandimethanol, 1,3-Cyclohexandimethanol, 1,4-Bis(2-hydroxyethoxy)cyclohexan, Norbornylenglykol, 1,4-Benzendiethanol, 2,4-Dimethyl-2-ethylenhexan-1,3-diol, 2-Buten-1,4-diol, Trimethylolethan, Trimethylolpropan, ethoxyliertes Trimethylolpropan, Trimethylolpropan-monoallylether, Trimethylolhexan, 1,2,4-Butantriol, Dipentaerythritol, Pentaerythrit, Dicyclopentadiendimethanol, ethoxiliertes Dimethylhydantoin.

Es hat sich gezeigt, dass die Verträglichkeit des Bindemittels durch die Anwesenheit von kurzkettigen Alkylgruppen, insbesonders Methylgruppen, im Glykol verbessert wird währenddem durch die Anwesenheit primärer OH-Gruppen die Reaktivität positiv beeinflusst wird. So zeichnen sich Polyethylenglykole durch gute Reaktivität bei geringerer Verträglichkeit aus, Polypropylenglykole hingegen durch sehr gute Verträglichkeit, dafür geringere Reaktivität.

Ein Glykol, das sowohl primäre Hydroxylgruppen als auch Methylgruppen in sich vereinigt, ist das Neopentylglykol. Infolge seiner geringen Masse ist jedoch das OH-Aequivalent bei Verwendung von Neopentylglykol nicht optimal. Das OH-Aequivalent kann durch Ethoxylierung des Neopentylglykols verbessert werden, insbesonders durch Einbringen von 1.5 bis 3 Ethylenoxid-Repetitionseinheiten.

Zusätzlich oder anstelle der Polyole können auch Aminoalkohole eingesetzt werden. Als Aminoalkohole sind bevorzugt Diethanolamin, Triethanolamin, Triisopropanolamin.

Durch Verwendung von drei- oder höherwertigen Alkoholen oder Aminoalkoholen können schnellere Festigkeitsentwicklungen und höhere Endfestigkeiten der Produkte erreicht werden.

Ferner hat sich gezeigt, dass die Flexibilität eines Bodenbelages oder einer Beschichtung verbessert werden kann, wenn ein Anteil mindestens eines monofunktionellen Alkohols, insbesonders einen C₈-C₁₂-Alkanol, z.B. Nonanol, ins erfindungsgemässe Bindemittel eingebaut wird. Der monofunktionelle Alkohol ersetzt üblicherweise 1 bis 10 Mol-% des zwei- oder mehrwertigen Alkohols oder Aminoalkohols.

Als Fettsäureester geeignet sind Ester von gesättigten und ungesättigten hydroxylgruppentragenden C₁₂ bis C₂₂ Fettsäuren, insbesonders Triglyceride. Speziell bevorzugt ist Rizinus(Kastor)öl.

Für eine allfällige Nachveresterung mit Dicarbonsäuren bevorzugt sind Adipinsäure, Azelainsäure, Sebacinsäure und Dodecandicarbonsäure.

Besonders bewährt haben sich reaktive Bindemittel mit einem PET-Anteil von 14 % bis 24 %.

Die Herstellung des reaktiven Bindemittels erfolgt vorzugsweise ausgehend von PET-Material in Form von zerkleinerten, gewaschenen Stückchen. Der Einsatz ganzer, entleerter Flaschen ist möglich aber weniger günstig.

Das ebenfalls Gegenstand dieser Erfindung bildende Verfahren zeichnet sich dadurch aus, dass sich die Hydroxylzahl im Bindemittel durch die Alkoholyse und Umesterung nicht ändert und dass das Verfahren ohne Zusatz von Lösungsmittel abläuft. Die Hydroxylzahl wird nur durch eine allfällige Dicarbonsäurenachveresterung reduziert.

Das PET-Material wird mit einem oder mehreren vorgemischten Polyolen im molaren Verhältnis von 0,2 (Polyol/Aminoalkohol) zu 1 (Repetiereinheit PET = (PET)) bis 1,8 (Polyol/Aminoalkohol) zu 1 (PET) versetzt. Besonders bevorzugt sind molare Verhältnisse von 0,5 bis 1,5 (Polyol/Aminoalkohol):(PET). Speziell bevorzugt wird das Polyestermaterial mit einer Polyolmischung, die vorzugsweise 80 % Triethylenglykol und speziell bevorzugt 80 % ethoxyliertes Neopentylglykol enthält, in Mengen von 10 bis 30 Gew.-% bezogen auf den Gesamtansatz oder 50-120 Gew.-% der PET Menge versetzt. Das Gemisch wird mit 0,1 % bis 2 % eines Katalysators versetzt. Als Katalysatoren können die üblichen Veresterungskatalysatoren wie Zinn(II)caprylat, Kobaltacetat, Mangan(II)acetat, Calziumhydroxid, Calziumformiat, Natriumhydroxid, Bariumhydroxid, Natriummethoxid, und organische Zinnkatalysatoren wie Dibutylzinnoxid verwendet werden. Speziell bewährt haben sich Zinkacetat Dihydrat und Kobaltnaphthenat und Tetrabutylorthotitanat. Anschliessend wird das Gemisch unter Rühren und vorzugsweise unter Inertgasatmosphäre oder Vakuum auf 180°C bis 230°C während ca. 0,5 bis 4 Stunden erhitzt. Hier kann das Gemisch in einer Zwischenstufe mit aliphatischen Dikarbonsäuren bei 200°C bis 230°C nachverestert werden.

Vorzugsweise erfolgt die Nachveresterung mit bis zu 10 % Sebazin- oder Adipinsäure. Besonders bevorzugt sind Nachveresterungen mit 2-10 % Adipinsäure, bezogen auf die Gesamtmenge der Mischung. Anschliessend an die Alkoholyse und die Nachveresterung, werden zu 100 Massenteilen des vorreagierten Gemisches Kastoröl hinzugegeben, im Verhältnis von 11 bis 800 Massenteilen, d.h. 0,08 - 11,9 Mol "Fettsäure" pro Mol PET. Bevorzugt sind Mengen-Verhältnisse von 70 zu 30 bis 30 zu 70 von Kastoröl und vorreagiertem Gemisch. Speziell bevorzugt ist eine Mischung enthaltend 40-70 Gew.-% Rizinusöl. Allgemein beträgt das Verhältnis Mol OH : Mol Rizinusöl 0,04 - 2,82, insbesonders 0,83 - 1,2.

Anschliessend wird das Gemisch nochmals für 0,5 - 2 Stunden bei 180-210°C unter Rühren erhitzt. Nach Abkühlung auf Raumtemperatur muss das erhaltene Bindemittel, insbesonders bei Verwendung von nicht bereits aufbereitetem PET-Material, von eingebrachten Verunreinigungen, z.B. Fremdmaterialien, durch Filtration getrennt werden.

Dank der Reaktion des gegebenenfalls nachveresterten Alkoholyseprodukts mit einem Fettsäureester, insbesonders einem Triglycerid, wird die Anzahl der Hydroxylgruppen im Gesamtsystem konstant gehalten, was zu speziell vorteilhaften Produkten führt. Zudem enthält das Produkt praktisch keine freien Säuregruppen, die unerwünscht sind, da sie die erwünschte und angestrebte Hydrophobie des Produkts beeinträchtigen.

Die beispielsweise gemäss den oben beschriebenen Verfahren hergestellten Bindemittel eignen sich in besonderer Weise zur Verwendung als Reaktionspartner von Polyisocyanaten zur Herstellung von PU-Massen, im besonderen für Fussböden, Beschichtungen und Giessmassen.

Die Verwendung der erfindungsgemässen Bindemittel zusammen mit aromatischen oder aliphatischen Polyisocyanaten ergibt Beschichtungen mit ausgezeichneten mechanischen Eigenschaften. So können hohe Zugfestigkeiten (10 MPa bis zu 40 MPa) bei gleichzeitig hohen Zugdehnungen (über 10 % bis über 100 %) realisiert werden. Diese Beschichtungen zeichnen sich zudem durch überraschend hohe Abrasionsbeständigkeiten und Kratzbeständigkeiten bei gleichzeitig schönen (glänzende bis seidenmatte, defektfreie) Oberflächen aus. Die Verträglichkeit des Bindemittels mit Silikat-, Carbonat-Füllstoffen und Pigmenten ist ebenfalls ausgezeichnet, was zu einer guten Lagerstabilität führt (kein Absetzen der Füllstoffe). Ein weiterer Vorteil des Verfahrens ist, dass das eingesetzte PET-Material ungereinigt und in grösseren Stücken eingesetzt werden kann. So können ganze, gebrauchte Getränkeflaschen samt Etiketten und Teilen (Deckel, Flaschenböden) aus anderen Kunststoffen direkt ohne vorgängiges Aussortieren der PET-fremden Teile ohne Qualitätseinbussen verwendet werden. Ein weiterer Vorteil der beschriebenen Bindemittel besteht darin, dass aufgrund der günstigen Hydroxylequivalente und der niedrigen Kosten, die Formulierung von Produkten möglich ist, welche keine Weichmacher enthalten. Weichmacher werden in Polyurethan-Formulierungen vor allem eingesetzt, um das Bindemittel mit inerten Materialien zu strecken und dadurch die Kosten der Formulierung zu senken, aber auch um die Viskosität herabzusetzen. Da die Weichmacher jedoch nicht chemisch ins Polymernetzwerk eingebunden werden, können sie mit der Zeit aus dem Produkt herausgelöst werden oder herauswandern, was zu schwerwiegenden Nachteilen wie Enthaftungen oder Beeinträchtigungen der Oberflächen führen kann.

### Beispiel 1:

### (Ohne Nachveresterung)

Ca. 400 g zerkleinerte PET-Stückchen aus gebrauchten Getränkeflaschen werden mit ca. 276 g Triethylenglykol und 4 g Zinkacetat Dihydrat versetzt und während ca. 4 Stunden bei 217°C in einem Glasreaktor mechanisch unter Stickstoffatmosphäre gerührt. Anschliessend werden ca. 1320 g Kastoröl zugegeben und die Mischung wird während weiteren 2 Stunden bei 195-200°C unter Vakuum erhitzt. Anschliessend wird auf Raumtemperatur abgekühlt und filtriert. Man erhält ein Bindemittel mit einem OH-Aequivalent von ca. 266 und eine Viskosität von 1850 ± 200 mPas bei 20°C, Dichte 1,0 kg/l. Die Umsetzung des oben beschriebenen Bindemittels mit MDI ergibt Beschichtungen mit Zugfestigkeiten von >25 MPa und Zugdehnungen von 68 % mit ausgezeichneten Abrasions- und Kratzfestigkeiten.

### Beispiel 2:

### (ohne Nachveresterung)

400 g zerkleinerte PET-Stückchen aus gebrauchten Getränkeflaschen werden mit ca. 400 g Triethylenglykol und 4 g Zinkacetat Dihydrat versetzt und während ca. 4 Stunden bei 217°C in einem Glasreaktor mechanisch unter Stickstoffatmosphäre gerührt. Anschliessend werden ca. 1320 g Kastoröl zugegeben und die Mischung wird während weiteren 2 Stunden bei 195-200°C unter Vakuum erhitzt. Anschliessend wird auf Raumtemperatur abgekühlt und filtriert. Man erhält ein Bindemittel mit einem OH-Aequivalent von ca. 224 und einer Viskosität von 1600 ± 200 mPas bei 20°C, Dichte 1,0 kg/l. Die Umsetzung des oben beschriebenen Bindemittels mit MDI ergibt Beschichtungen mit Zugfestigkeiten von >25 MPa und Zugdehnungen von 68 % mit ausgezeichneten Abrasions- und Kratzfestigkeiten.

### Beispiel 3:

### (Mit Adipinsäure-Nachveresterung)

400 g zerkleinerte PET-Stückchen aus gebrauchten Getränkeflaschen werden mit ca. 440 g Triethylenglykol, 36 g Glycerin und 4 g Zinkacetat Dihydrat versetzt und während ca. 4 Stunden bei 217°C in einem Glasreaktor mechanisch unter Stickstoffatmosphäre gerührt. Anschliessend wird mit 160 g Adipinsäure während ca. 4 Stunden bei 217°C nachverestert. Anschliessend werden ca. 960 g Kastoröl zugegeben und die Mischung wird während weiteren 2 Stunden bei 195-200°C unter Vakuum erhitzt. Anschliessend wird auf Raumtemperatur abgekühlt und filtriert. Man erhält ein Bindemittel mit einem OH-Aequivalent von ca. 258 und einer Viskosität von 2500-3000 mPas bei 20°C, Dichte 1,0 kg/l. Die Umsetzung des oben beschriebenen Bindemittels mit MDI ergibt Beschichtungen mit Zugfestigkeiten von >30 MPa und Zugdehungen von 50 % mit ausgezeichneten Abrasions- und Kratzfestigkeiten.

### Beispiel 4:

### (Mit Adipinsäure-Nachveresterung und Aminoalkohol Verzweigungen)

400 g zerkleinerte PET-Stückchen aus gebrauchten Getränkeflaschen werden mit ca. 440 g Triethylenglykol, 36 g Diethanolamin und 4 g Zinkacetat Dihydrat versetzt und während 4 Stunden bei 217°C in einem Glasreaktor mechanisch unter Stickstoffatmosphäre gerührt. Anschliessend wird mit 160 g Adipinsäure während ca. 4 Stunden bei 217°C nachverestert. Anschliessend werden ca. 960 g Kastoröl zugegeben und die Mischung wird während weiteren 2 Stunden bei. 195-200°C unter Vakuum erhitzt. Anschliessend wird auf Raumtemperatur abgekühlt und filtriert. Man erhält ein Bindemittel mit einem OH-Aequivalent von ca. 266 und einer Viskosität von 2500-3000 mPas bei 20°C, Dichte 1,0 kg/l.

Die Umsetzung des oben beschriebenen Bindemittels mit MDI (Methylendiphenyldiisocyanat) ergibt Beschichtungen mit Zugfestigkeiten von >32 MPa und Zugdehnungen von 40 % mit ausgezeichneten Abrasions- und Kratzfestigkeiten.

### Beispiel 5

### Glykole von PET mit ethoxyliertem Neopentylglykol

440 g zerkleinerte PET Stückchen aus gebrauchten Getränkeflaschen werden mit 560 g ethoxyliertem Neopentylglykol (Ethoxylierungsgrad 2,5) und 8 g Zinkacetat-dihydrat versetzt und während 1 Stunde bei 230°C in einem Glasreaktor mechanisch unter Stickstoff gerührt. Anschliessend werden 976 g Kastoröl zugegeben und die Mischung wird während einer weiteren Stunde bei 200°C unter Vakuum erhitzt. Dabei werden ca. 1 % Destillat abgezogen. Anschliessend wird auf Raumtemperatur abgekühlt und filtriert. Man erhält ein Bindemittel mit einem OH-Aequivalent von 257 und einer Viskosität von 2200 mPas. Die Umsetzung des oben beschriebenen Bindemittels mit MDI ergibt Beschichtungen mit Zugfestigkeiten von > 25 MPa und Zugdehnungen von 70 % mit ausgezeichneten Abrasions- und Kratzfestigkeiten.

### Beispiel 6

### Glykolyse von PET mit Dipropylenglykol und ethoxyliertem Trimethylolpropan

400 g zerkleinerte PET-Stückchen aus gebrauchten Getränkeflaschen werden mit 240 g Dipropylenglykol und 160 g ethoxyliertem Trimethylpropan (Ethoxylierungsgrad 7) und 8 g Zinkacetat-dihydrat verstzt und während 1 Stunde bei 230°C in einem Glasreaktor mechanisch unter Stickstoff gerührt. Anschliessend werden 1200 g Kastoröl zugegeben und die Mischung wird während einer weiteren Stunde bei 200°C unter Vakuum erhitzt. Dabei werden ca. 1 % Destillat abgezogen. Anschliessend wird auf Raumtemperatur abgekühlt und filtriert. Man erhält ein Bindemittel mit einem OH-Aequivalent von 257 und einer Viskosität von 2400 mPas. Die Umsetzung des oben beschriebenen Bindemittels mit MDI ergibt Beschichtungen mit Zugfestigkeiten von > 30 MPa und Zugsdehnungen von 40 % mit ausgezeichneten Abrasions- und Kratzfestigkeiten.

## Patentansprüche

1. Bindemittel, dadurch gekennzeichnet, dass es mindestens eine Verbindung der Formel (I) 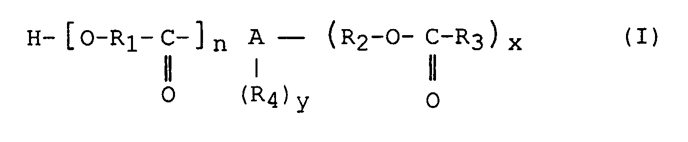 und/oder der Formel (II) 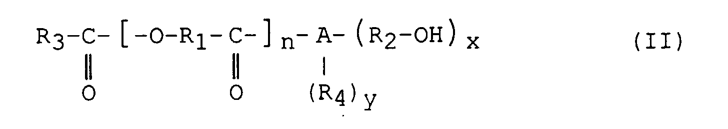 enthält, in denen 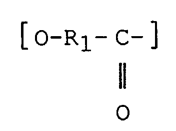 eine Polyesterrepetitionseinheit enthaltend mindestens eine aromatische Gruppe ist,
n eine ganze Zahl von 1 bis 4 ist,
A Sauerstoff oder Stickstoff bedeutet,
x 1 oder 2 bedeutet und y = 0 oder 1 ist, wobei x+y für A = N = 2 ist und wobei für A = O x = 1 und y = 0 ist,
R₁ ein aromatisches Polyestersegment ist, insbesonders ein Polyestersegment des Kondensationsprodukts aus einer aromatischen Disäure und einem gegebenenfalls substituierten aliphatischen Glykol,
R₂ eine gegebenenfalls OH substituierte aliphatische, cyclische oder aromatische C₁-C₈ Kohlenwasserstoffkette oder eine gegebenenfalls OH-substituierte Di-, Tri- oder Tetraalkylethergruppe oder ein gegebenenfalls OH substituierter Ester oder Polyester aus mindestens einer aliphatischen oder aromatischen Carbonsäure mit aliphatischen Alkoholen und/oder Glykolen,
R₃ ein mit mindestens einer OH-Gruppe substituierter, gesättigter oder ungesättigter C₁₁-C₂₁-Alkylrest ist und
R₄ Wasserstoff oder Hydroxyalkyl bedeutet
bei gleichzeitiger Anwesenheit mindestens einer Verbindung, die ausgewählt ist aus der Gruppe umfassend
HO-R₂-OH, HO-R₂-NH₂, 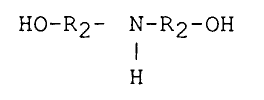 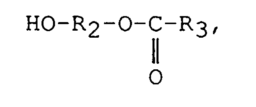 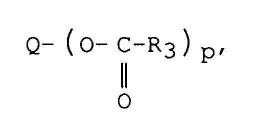 worin R₂ und R₃ die oben angegebene Bedeutung haben, Q ein gegebenenfalls OH subsituierter C₃ -C₆ -Alkylrest ist und p = 1 bis 4 bedeutet.

2. Bindemittel gemäss Anspruch 1, dadurch gekennzeichnet, dass
R₁ = 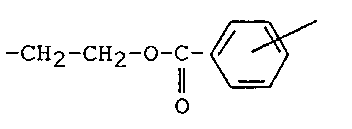 oder 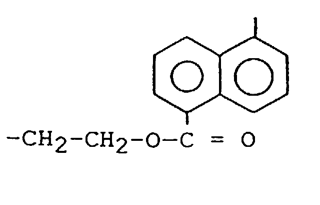 oder 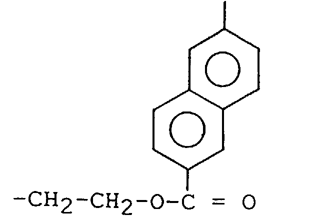 ist,
R₂ = -CH₂-CH₂-O-CH₂-CH₂-O-CH₂-CH₂- ist oder einschliesst
R₃ = CH₃(CH₂)₅-CHOH-CH₂-(CH)₂-(CH₂)₇-
Q = 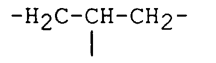
und p = 3 ist.

3. Bindemittel gemäss Anspruch 1 oder 2, dadurch gekennzeichnet, dass
R₂ ausgewählt ist aus der Gruppe umfassend

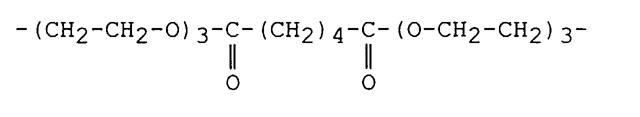

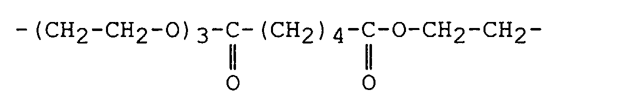

4. Bindemittel gemäss Anspruch 1, dadurch gekennzeichnet, dass R₂ ethoxyliertes Neopentylglykol ist, insbesonders ethoxyliertes Neopentylglykol mit 1.5 bis 3 Ethylenoxid-Repetitionseinheiten.

5. Bindemittel gemäss einem der Ansprüche 1 bis 4, dadurch gekennzeichnet, dass es 14-24 Gew.-% O-R₁-CO bezogen auf das Gesamtgewicht des Bindemittels enthält.

6. Verfahren zur Herstellung eines Bindemittels gemäss einem der Ansprüche 1 bis 5, dadurch gekennzeichnet, dass ein aromatischer Polyester mit der wiederkehrenden Repetitionseinheit 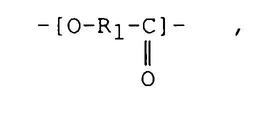 worin R₁ die oben angegebene Bedeutung hat, erst mit einem Polyol der Formel
HO-R₂-OH
in der R₂ die oben angegebene Bedeutung hat und anschliessend mit einem Fettsäureester der Formel 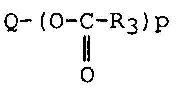 worin Q, R₃ und p die oben angegebene Bedeutung haben, umgesetzt wird.

7. Verfahren gemäss Anspruch 6, dadurch gekennzeichnet, dass das Produkt der Reaktion des Polyesters mit mindestens einem Polyol erst mit einer Dicarbonsäure nachverestert und dann mit mindestens einem Fettsäureester umgesetzt wird.

8. Verfahren gemäss Anspruch 6 oder 7, dadurch gekennzeichnet, dass 14-24 Gew.-% bezogen auf das Gesamtgewicht des Bindemittels Polyethylenterephthalat, Polyethylennaphthalat oder deren Copolykondensate eingesetzt werden.

9. Verfahren gemäss einem der Ansprüche 6 bis 8, dadurch gekennzeichnet, dass 10-30 Gew.-% bezogen auf das Gesamtgewicht des Bindemittels eines Polyols oder einer Polyolmischung der Formel HO-R₂-OH eingesetzt werden, wobei R₂ die oben angegebene Bedeutung hat.

10. Verfahren gemäss Anspruch 9, dadurch gekennzeichnet, dass die Polyolmischung mindestens 80 Gew-% Triethylenglykol enthält.

11. Verfahren gemäss einem der Ansprüche 6 bis 10, dadurch gekennzeichnet, dass 40-70 Gew.-% Fettsäureester der Formel 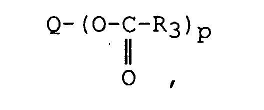 insbesonders Rizinusöl, bezogen auf das Gesamtgewicht des Bindemittels eingesetzt werden, wobei Q, R₃ und p die oben angegebene Bedeutung haben.

12. Verfahren gemäss einem der Ansprüche 7 bis 11, dadurch gekennzeichnet, dass für die Nachveresterung bis zu 10 Gew.-% Sebazin- oder Adipinsäure, insbesonders 2 bis 10 Gew.-% Adipinsäure eingesetzt werden.

13. Verfahren gemäss einem der Ansprüche 6 bis 12, dadurch gekennzeichnet, dass die Umsetzung des Polyesters mit dem Polyol in Gegenwart eines Katalysators und bei 180°C bis 230°C durchgeführt wird, gegebenenfalls in Inertgasatmosphäre, und dass eine allfällige Nachveresterung in einem Temperaturbereich von 200°C bis 230°C und die Umsetzung mit dem Fettsäureester bei einer Temperatur von 180°C bis 210°C insbesonders unter Vakuum stattfindet.

14. Verfahren gemäss einem der Ansprüche 6 bis 13, dadurch gekennzeichnet, dass ein Teil des zwei- oder mehrwertigen Alkohols HO-R₂-OH durch monofunktionellen Alkohol, insbesonders einen C₈-C₁₂-Alkanol, ersetzt wird.

15. Verwendung eines Bindemittels gemäss einem der Ansprüche 1 bis 5 zur Herstellung von Polyurethanen.

16. Verwendung eines Bindemittels gemäss einem der Ansprüche 1 bis 5 mit einem Isocyanathärter, insbesonders einem Methylendiphenyldiisocyanat enthaltenden Isocyanathärter, zur Herstellung eines Bodenbelags.

## Claims

1. Binder characterized in that it comprises at least one compound of formula (I) 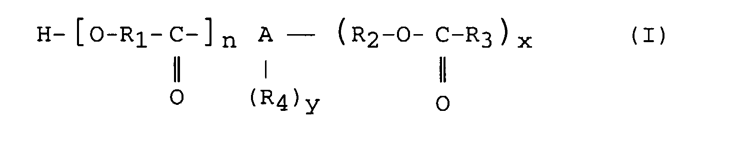 and/or formula (II) 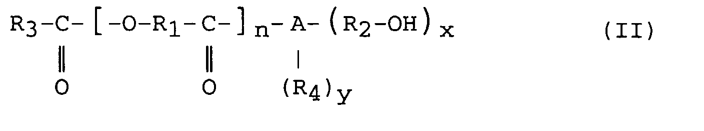 in which 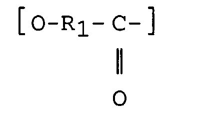 is a polyester repeating unit comprising at least one aromatic group,
n is an integer from 1 to 4,
A is oxygen or nitrogen,
X is 1 or 2 and y = 0 or 1, whereby for A = N x+y is 2 and whereby for A = 0 x is 1 and y is 0.
R₁ is an aromatic polyester segment, particularly the polyester segment of the condensation product of an aromatic diacid and an optionally substituted aliphatic glycol,
R₂ is an optionally OH substituted, aliphatic, cyclic or aromatic C₁-C₈ hydrocarbon chain or an optionally OH substituted dialkylether, trialkylether or tetraalkylether group or an optionally OH substituted ester or polyester of at least one aliphatic or aromatic carboxylic acid with aliphatic alcohols and/or glycols,
R₃ is a saturated or unsaturated C₁₁-C₂₁ alkylradical substituted by at least one OH group, and
R₄ is hydrogen or hydroxyalkyl
in simultaneous presence of at least one compound selected from the group comprising
HO-R₂-OH, HO-R₂-NH₂, 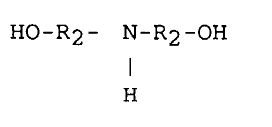 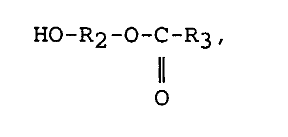 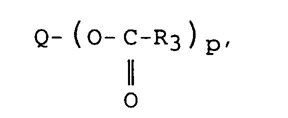 wherein R₂ and R₃ are as described above, Q is an optionally OH substituted C₃ to C₆ alkyl radical and p is 1 to 4.

2. Binder according to claim 1, characterized in that
R₁ = 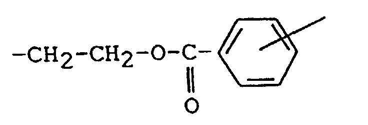 or 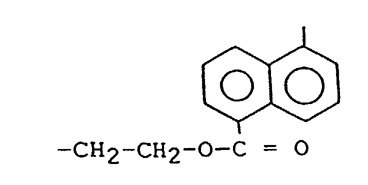 or 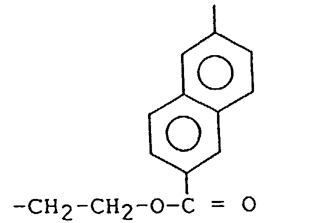
R₂ comprises -CH₂-CH₂-O-CH₂-CH₂-O-CH₂-CH₂-
R₃ is CH₃(CH₂)₅-CHOH-CH₂-(CH)₂-(CH₂)₇-
Q is 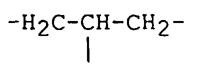
and p is 3.

3. Binder according to claim 1 or 2, characterized in that
R₂ is selected from the group consisting of

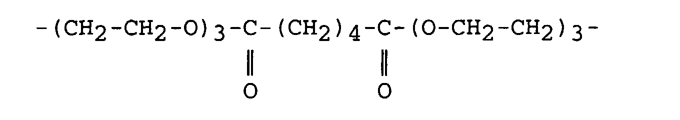

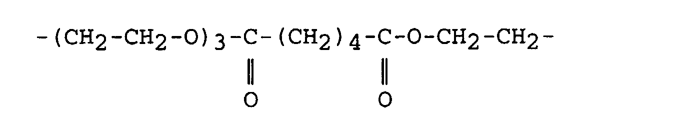

4. Binder according to claim 1 characterized in that R₂ is ethoxylated neopentyl glycol, particularly ethoxylated neopentyl glycol with 1.5 to 3 ethylene oxide repeating units.

5. Binder according to anyone of claims 1 to 4, characterized in that it comprises 14 to 24 % by weight referred to the total weight of the binder of O-R₁-CO.

6. Process for the production of a binder according to anyone of claims 1 to 5, characterized in that an aromatic polyester with the repeatedly occurring repeating unit 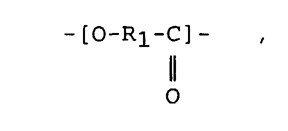 wherein R₁ is as described above,
is first reacted with a polyol of the formula
HO-R₂-OH,
wherein R₂ is as described above, and then with a fatty acid ester of the formula 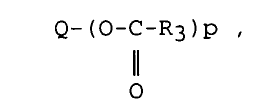 wherein Q, R₃ and p are as described above.

7. Process according to claim 6, characterized in that the product of the reaction of the polyester with at least one polyol is first after-esterified with a dicarboxylic acid and then reacted with at least one fatty acid ester.

8. Process according to claim 6 or 7, characterized in that 14 to 24 % by weight referred to the total weight of the binder of polyethylene terephthalate, polyethylene naphthalate or their copolycondensates are used.

9. Process according to anyone of claims 6 to 8, characterized in that 10 to 30 % by weight referred to the total weight of the binder of a polyol or a polyol mixture of the formula HO-R₂-OH, wherein R₂ has the above mentioned meaning, is used.

10. Process according to claim 9, characterized in that the polyol mixture comprises at least 80 % by weight of triethylene glycol.

11. Process according to anyone of claims 6 to 10, characterized in that 40-70 % by weight referred to the total weight of the binder of a fatty acid ester of formula 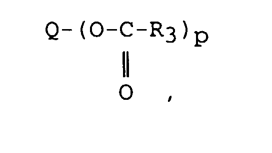 wherein Q, R₃ and p have the above mentioned meaning, particularly castor oil, are used.

12. Process according to anyone of claims 7 to 11, characterized in that for the after-esterification up to 10 % by weight of sebacic acid or adipic acid are used, particularly 2 to 10 % adipic acid.

13. Process according to anyone of claims 6 to 12, characterized in that the reaction of the polyester with the polyol is performed in the presence of a catalyst and at a temperature of 180°C to 230°C, optionally under inert gas, and in that a possible after-esterification is performed in a temperature range of from 200°C to 230°C and the reaction with the fatty acid ester is performed at a temperature of 180°C to 210°C, particularly under vacuum.

14. Process according to anyone of claims 6 to 13, characterized in that a part of the difunctional or polyfunctional alcohol HO-R₂-OH is substituted by a monofunctional alcohol, particularly a C₈ to C₁₂ alkanol.

15. Use of a binder according to anyone of claims 1 to 5 for the production of polyurethanes.

16. Use of a binder according to anyone of claims 1 to 5 together with an isocyanate based hardener, in particular an isocyanate based hardener comprising methylenediphenyldiisocyanate, for the production of a floor covering.

## Revendications

1. Liant, caractérisé en ce qu'il contient au moins un composé de la formule (I) 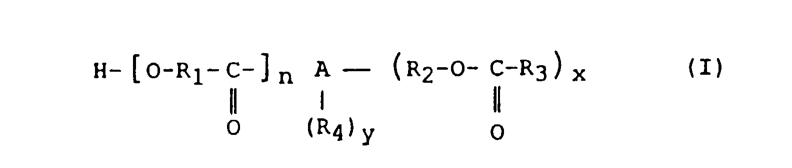 et/ou de la formule (II) 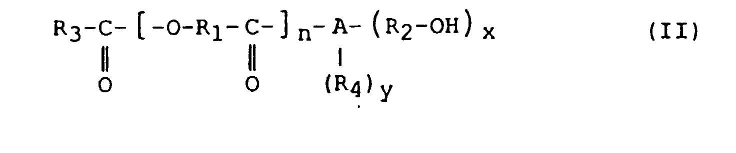 dans lesquelles 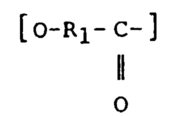 représente une unité répétitive de polyester contenant au moins un groupe aromatique,
n est un nombre entier de 1 à 4,
A représente l'oxygène ou l'azote,
X a une valeur de 1 ou 2 et y = 0 ou 1, avec x+y pour A = N = 2 et pour A = 0 x = 1 et y = 0,
R₁ représente un segment de polyester aromatique, en particulier un segment de polyester du produit de condensation d'un diacide aromatique et d'un glycol aliphatique éventuellement substitué,
R₂ représente une chaîne hydrocarbonée en C₁ à C₈ aliphatique, cyclique ou aromatique éventuellement substituée par OH, ou un radical di-, tri- ou tétraalkyléther éventuellement substitué par OH, ou un ester ou un polyester éventuellement substitué par OH d'au moins un acide carboxylique aliphatique ou aromatique avec des alcools aliphatiques et/ou des glycols,
R₃ représente un radical alkyle en C₁₁ à C₂₁ saturé ou insaturé substitué par au moins un radical OH, et
R₄ représente l'hydrogène ou un radical hydroxyalkyle en présence simultanée d'au moins un composé choisi
dans le groupe comprenant
HO-R₂-OH, HO-R₂-NH₂, 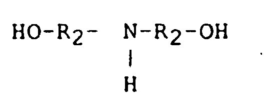 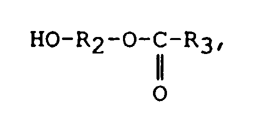 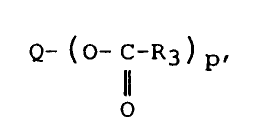 où R₂ et R₃ ont les significations ci-dessus, Q représente un radical alkyle en C₃ à C₆ éventuellement substitué par OH et p = 1 à 4.

2. Liant selon la revendication 1, caractérisé en ce
R₁ = 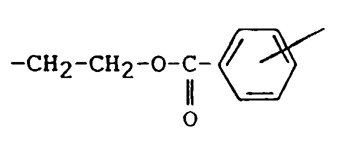 ou 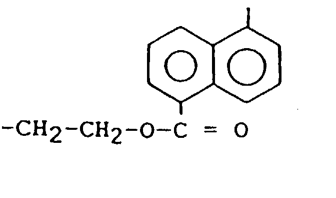 ou 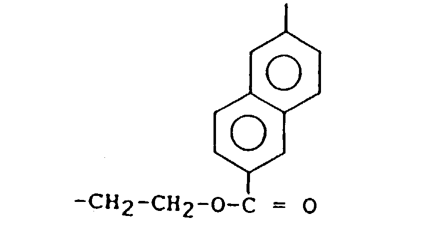
R₂ = -CH₂-CH₂-O-CH₂-CH₂-O-CH₂-CH₂- ou comprend
R₃ = CH₃(CH₂)₅-CHOH-CH₂-(CH)₂-(CH₂)₇-
Q = 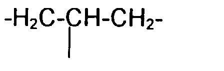
et p = 3.

3. Liant selon la revendication 1 ou 2, caractérisé en ce que R₂ est choisi dans le groupe comprenant

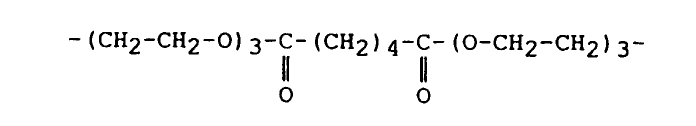

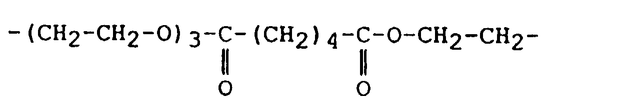

4. Liant selon la revendication 1, caractérisé en ce que R₂ est un néopentylglycol éthoxylé, en particulier un néopentylglycol éthoxylé par 1,5 à 3 unités répétitives d'oxyde d'éthylène.

5. Liant selon l'une des revendications 1 à 4, caractérisé en ce qu'il contient de 14 à 24% en poids de O-R₁-CO, par rapport au poids total du liant.

6. Procédé de préparation d'un liant selon l'une des revendications 1 à 5, caractérisé en ce que l'on fait d'abord réagir un polyester aromatique comportant l'unité répétitive 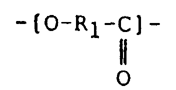 dans laquelle R₁ a la signification ci-dessus, avec un polyol de la formule
HO-R₂-OH
dans laquelle R₂ a la signification ci-dessus, et ensuite avec un ester d'acide gras de la formule 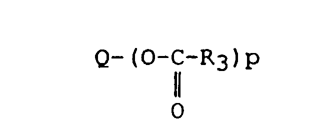 dans laquelle Q, R₃ et p ont les significations ci-dessus.

7. Procédé selon la revendication 6, caractérisé en ce que le produit de réaction du polyester avec au moins un polyol est d'abord post-estérifié par un acide dicarboxylique, puis mis en réaction avec au moins un ester d'acide gras.

8. Procédé selon la revendication 6 ou 7, caractérisé en ce que l'on met en oeuvre de 14 à 24%, par rapport au poids total du liant, de polyéthylène téréphtalate, polyéthylène naphtalate ou leurs polycondensats.

9. Procédé selon l'une des revendications 6 à 8, caractérisé en ce que l'on met en oeuvre de 10 à 30%, par rapport au poids total du liant, d'un polyol ou d'un mélange de polyols de la formule HO-R₂-OH, où R₂ a la signification ci-dessus.

10. Procédé selon la revendication 9, caractérisé en ce que le mélange de polyols contient au moins 80% en poids de triéthylène glycol.

11. Procédé selon l'une des revendications 6 à 10, caractérisé en ce que l'on met en oeuvre de 40 à 70% en poids d'esters d'acide gras de la formule 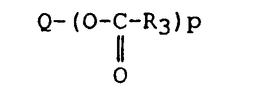 en particulier de l'huile de ricin, par rapport au poids total du liant, et que Q, R₃ et p ont la signification ci-avant.

12. Procédé selon l'une des revendications 7 à 11, caractérisé en ce que l'on met en oeuvre, pour la post-estérification, jusqu'à 10% en poids d'acide sébacique ou adipique, en particulier de 2 à 10% en poids d'acide adipique.

13. Procédé selon l'une des revendications 6 à 12, caractérisé en ce que l'on entreprend la réaction du polyester avec le polyol en présence d'un catalyseur et à une température de 180°C à 230°C, éventuellement sous atmosphère de gaz inerte, et qu'ont lieu une éventuelle post-estérification dans une plage de température de 200°C à 230°C et la réaction avec l'ester d'acide gras à une température de 180°C à 210°C, en particulier sous vide.

14. Procédé selon l'une des revendications 6 à 13, caractérisé en ce qu'une partie de l'alcool bivalent ou polyvalent HO-R₂-OH est remplacée par un alcool monofonctionnel, en particulier par un alcool en C₈ à C₁₂.

15. Utilisation d'un liant selon l'une des revendications 1 à 5 pour la préparation de polyuréthannes.

16. Utilisation d'un liant selon l'une des revendications 1 à 5 avec un durcisseur d'isocyanate, en particulier un durcisseur d'isocyanate contenant un diisocyanate de méthylènediphényle, pour la production d'un revêtement de sol.
